# EUROPEAN PATENT APPLICATION

(11) **EP 2 184 903 A1**
(43) Date of publication of application: **12.05.2010**
(21) Application number: 09290767.4
(22) Date of filing: 07.10.2009
(51) Int. Cl.: H04L 29/08

(54) **Method and device for automatically installing an applciation**

(30) Priority: 06.11.2008 EP 08305781
(71) Applicant: Alcatel Lucent, 75008 Paris (FR)
(72) Inventor: Van Daele, Piet Michel Albert, 9040 Sint-Amandsberg (BE); Cristallo, Geoffrey, 1080 Molenbeek (BE); Justen, Pascal Marie Edouard Julien, 1150 Sint-Pieters-Woluwe (BE); Acke, Willem Jozef Amaat, 2820 Rijmenam (BE); Stevens, Christoph, 9190 Stekene (BE); Liekens, Werner Mario, 2860 Sint Katelijne Waver (BE); Vermoessen, Luc, 2880 Bornem (BE); Van Leeuwen, Tom, 9000 Gent (BE); De Loof, Jourik, 2630 Aartselaar (BE)
(74) Representative: Moens, Marnix Karel Christiane

(57) **Abstract**

The present invention is related to a method for automatically installing an application on a service platform. The method comprises the steps
- checking if installing the application on the service platform is in agreement with at least one compliance condition imposed by a service available on the service platform, whereby said service is different from said application,
- installing the application on the service platform if said checking yields a positive outcome.

## Description

### Field of the Invention

The present invention generally relates to the field of devices for remote configuration of applications and services over communication networks.

### Background of the Invention

The OSGi^{™} Alliance (Open Service Gateway initiative) specifies, creates, advances and promotes wide industry adoption of an open service delivery and management platform. The OSGi^{™} technology is designed to ease the development of new services and applications for the latest generation of networked devices. Adding an OSGi^{™} service platform to a device, enables managing the lifecycle of the software components in the device from anywhere in the network. Software components can be installed, updated or removed on the fly without having to disrupt the operation of the device. The OSGi^{™} service platform is a Java based service platform running on top of a Java Virtual Machine (JVM) residing in the device and can be remotely managed. The core part of the specifications is a framework that defines an application lifecycle model and a service registry. Based on this framework, a large number of OSGi^{™} services have been defined.

The DSL Forum is an international industry consortium of service providers, equipment and component manufacturers and other interested parties, focussing on developing broadband DSL. The DSL Forum develops technical specifications and indirectly standards that enable delivery of DSL products and services. More information about the DSL Forum is available from its internet site http://www.dslforum.org. One of the technical specifications is the DSL forum's Technical report TR-069 (e.g. issue 1, amendment 2, dating from Dec. 2007 - also referred to as version v1.1 for the purpose of this description), specifying the CPE WAN Management Protocol (also referred to as CWMP or TR-069). The TR-069 Management Protocol and corresponding network architectures allow communication between a Customer Premises Equipment (CPE) and an automatic configuration server (ACS). It defines a mechanism that encompasses secure auto-configuration of a CPE and also incorporates other CPE management functions into a common framework.

Today, large-scale software deployment on home devices (e.g. a router or gateway) is still limited to monolithic and inter-independent software applications. With the introduction of a flexible, hardware-independent and open service platform (e.g. OSGi/Java), applications can be used on a wide range of devices, rather than only on a particular predetermined device. Instead of producing device-specific monolithic blocks, applications are being fragmented into reusable and portable software components, for instance called bundles in OSGi terminology. However, promoting reusability has consequences in terms of ease of service and application deployment.

Recently, there has been an increasing interest from operators in managing open service platforms in the home of the users/clients. In order to do this a number of problems need to be solved. With the growing number of devices, also the number of applications can be expected to increase. End-users are expected to be provided with services and applications on an individual basis (e.g. on demand). From the operator and service provider point of view, a mesh of very complex software dependencies can then be created, which will limit the exploitation of this outermost flexible deployment idea. Physical constraints of devices (especially small portable devices) prevent to deploy 'blindly'. Therefore memory and storage limitations, CPU utilization, software duplicates, unresolved references etc., but also upgrades, software package replacements, rollbacks etc. need to be carefully managed and monitored. Moreover, operators need to have a view on the correct installation of full end-user applications, not only of individual bundles which are only constituents of applications.

Patent application EP 1835690 relates to a method to configure data of a bundle deployed on an OSGi service platform in a device. The OSGi service platform is remotely managed by a remote management server via a management agent using a remote management Protocol, namely the CPE WAN management protocol (CWMP) as defined in TR-069. A solution is provided allowing the operator and platform provider to separate the OSGi-specific bundle installation from the management of the service/application offered by the bundle.

It is known in the art to perform, during the process of installation of the application or service on the CPE, a dependency checking. This existing solution comprises downloading individual bundles to the execution environment and having only dependencies, resolved by the execution environment (e.g. OSGi or Linux). This is done without having any knowledge about what applications and services are already deployed and running.

In WO2008/032922 a method and device is disclosed for lightweighting an application in an embedded terminal by separately implementing the application so as to be optimized to each environment through duplicated application management. However, no knowledge about what other applications and services are already deployed and running is taken into account.

However, operators desire improved control of the applications deployed on a SGW. Consequently, there is a need for a way to control more tightly which applications can be deployed onto service platforms. Further, providing extra degrees for management may be a major step in making component oriented software mass deployment successful.

### Aims of the invention

The present invention aims to provide a method and device for automatically installing an application on a service platform in a controlled way, whereby the drawbacks and limitations of the prior art solutions are overcome.

### Summary

The present invention relates to a method for automatically installing an application on a service platform. The method comprises the steps of
- checking if installing said application on the service platform is in agreement with at least one compliance condition imposed by a service already available on the service platform, said service being different from the application to be installed,
- installing said application on the service platform if the step of checking yields a positive outcome.
In a preferred embodiment at least one compliance condition is imposed by a service subscription type of the service already available on the platform. In another preferred embodiment a compliance condition is imposed by operational parameters of the service platform (in other words by the type of service platform). Advantageously there is at least one compliance condition imposed by the subscription type and at least one condition imposed by the operational parameters. The service platform can advantageously be OSGi or Linux. Note however that the method of the invention can also be applied on other service platforms. The steps of checking and installing are preferably performed in a remote configuration device.

The object of the invention, namely improved control, is indeed achieved by performing the method as above-described. Before actually installing an application on the service platform it is checked whether installation of the application meets the compliance conditions imposed by the service(s) already available on the platform. Examples of compliance conditions that can be imposed may relate to certain combination(s) of applications that can or cannot be provided together on the service platform taking into account the type of service platform, the applications that were already installed on it previously, knowledge related to the service subscription types of (an) already installed service(s) and so on. The remote configuration device effectively has so the ability to make sure that at application installation time all compliance conditions are indeed met, as it is also in charge of the actual installation.

In an embodiment of the invention the method comprises the further step of defining the application to be installed. This step of defining typically comprises indicating one or more application components and some metadata. In an OSGi context such an application component is typically a bundle.

In another embodiment the method further comprises a step of defining the service subscription type.

The method of the invention advantageously further comprises a step of defining the operational parameters of the service platform.

The step of checking preferably comprises defining a relation between applications and said service platform.

In case the step of checking results in a negative outcome (i.e. an indication that the application cannot be installed because it does not fulfil the preconditions), a message is preferably conveyed to the operator or service provider of the remote configuration device to inform him of the non-installation.

In another embodiment of the invention the installation is performed via an associated auto-configuration server according to a remote management protocol. Examples can be the TR-069 protocol or the Open Mobile Alliance Device Management (OMA-DM) protocol. The method of the invention then preferably comprises the step of checking bundle dependency information.

In an advantageous embodiment the service platform comprises an execution environment arranged for supporting lifecycle management operations. A typical execution environment in the context of this invention can be an OSGI platform or a Linux platform.

The method according to the invention preferably further comprises the step of storing dependency information on a suitable storage means.

In another aspect the invention relates to a remote configuration device that is arranged for automatically installing an application on a service platform and that comprises processing means for checking if installing said application on the service platform is in agreement with compliance conditions imposed by at least one service available on the service platform, said service being different from the application to be installed.

In a preferred embodiment the remote configuration device comprises storage means for storing the compliance conditions. Advantageously, the remote configuration device is a home service management device. The remote configuration device is preferably arranged for communication with the service platform by means of a TR-069 session.

In another aspect the invention relates to a service platform adapted for storing at least one compliance condition imposed by a service available on the service platform for an application to be installed. The dependency information comprises application dependency information.

The principles as set out above can also be applied in a method for retrieving the inventory of installed applications on a particular service gateway either from the database of the auto-configuration server, or directly from the service gateway.

### Brief Description of the Drawings

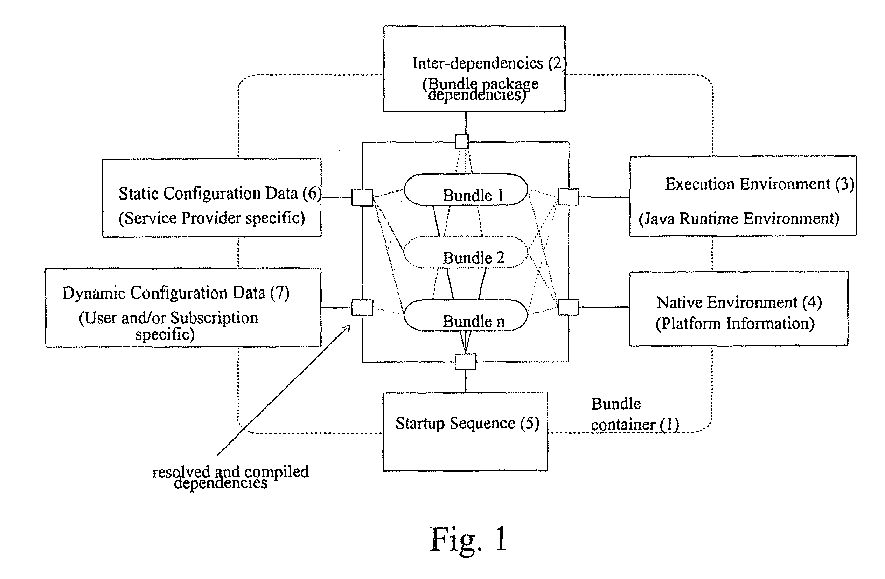

Fig. 1 illustrates the concept of "bundle container". Different types of dependencies exist. Dependencies regarding 'Interdependencies', 'Execution Environment' and 'Native Environment' are specified. According to embodiments of the present invention extra overall application or service dependencies are taken into account (as for instance dependencies relating to startup sequence and/or static configuration data(service provider specific) and/or dynamic configuration data (user and/or subscription specific)), and/or dependencies are checked upfront in the ACS in order to reduce deployment issues.

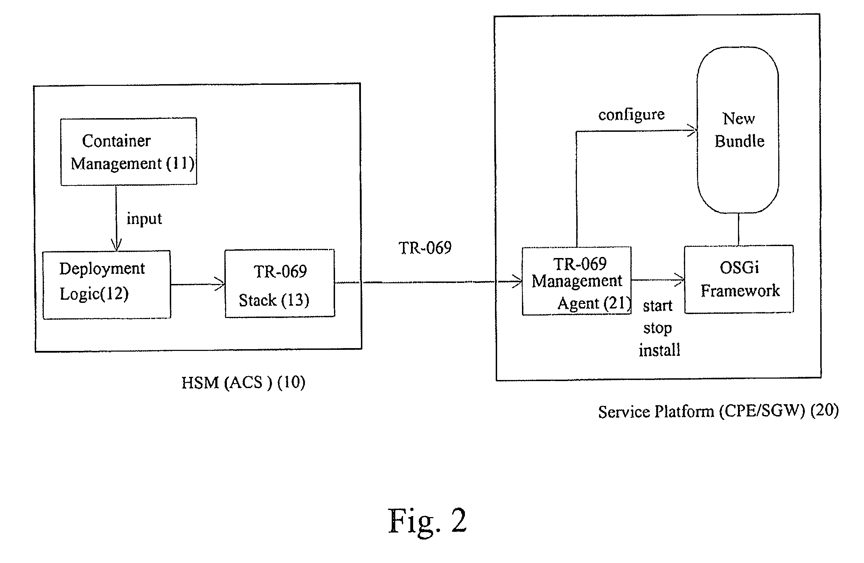

Fig. 2 illustrates a sequence of deployment commands executed at the ACS-side, according to preferred embodiments of the present invention. The deployment scenario can be supported by dedicated deployment logic on the ACS-side. Container management can feed the necessary instructions to the deployment logic that takes care to translate the commands into a corresponding set of remote management protocol messages, e.g. Remote Procedure Calls (RPCs) in case of the TR-069 remote management protocol.

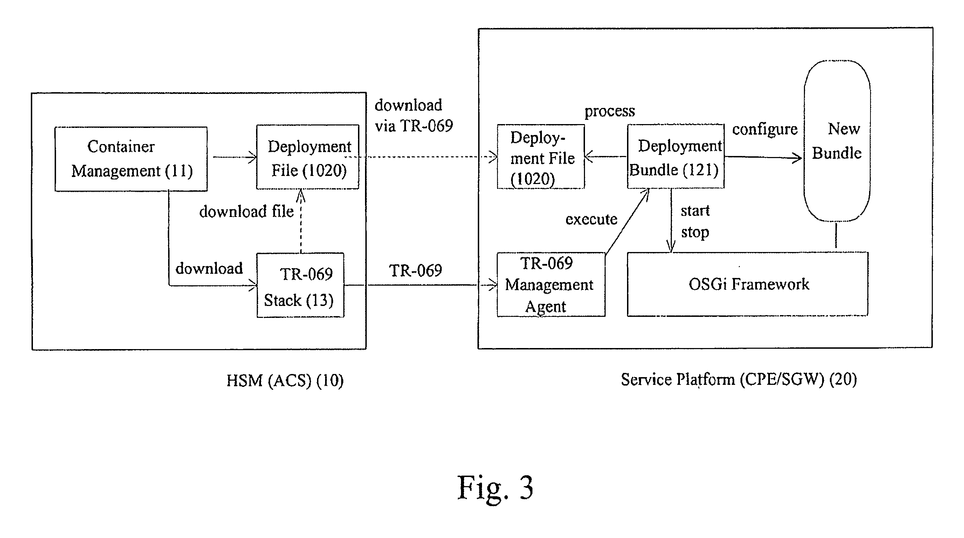

Fig. 3 illustrates a sequence of deployment commands executed at Service Platform Side, according to embodiments of the present invention. The Container Management can generate a deployment file which contains the deployment commands. It can be downloaded to the service platform (at the CPE/SGW) where it is further processed by the Deployment Bundle. In an alternative embodiment, the deployment file is not downloaded to the service platform, but pushed via a dedicated remote management protocol RPC (e.g. via the SetParameterValue RPC in case of the TR-069 Remote Management Protocol).

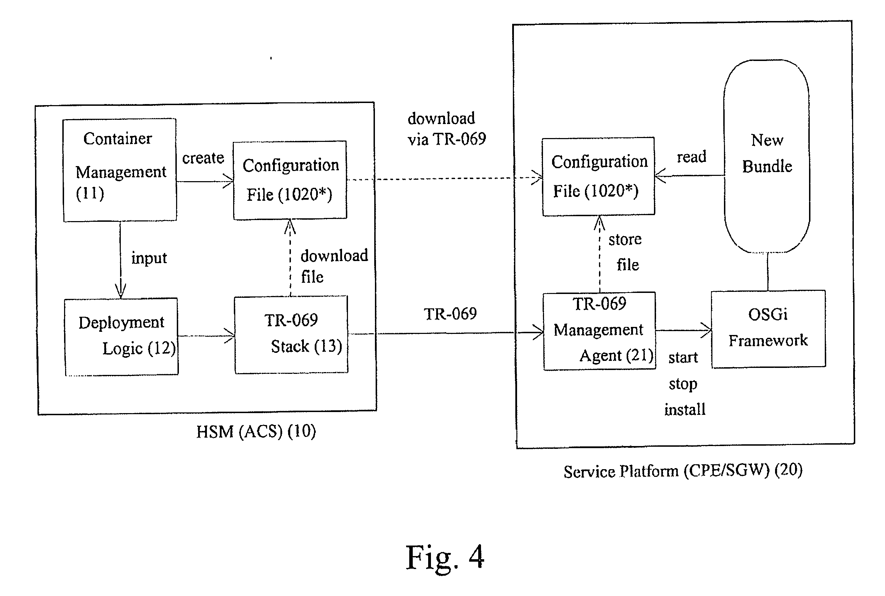

Fig. 4 illustrates embodiments according to the present invention, which are in a sense a combination of embodiments illustrated in Fig. 2 and Fig. 3. Here, the lifecycle management can be performed via the remote management protocol (e.g. TR-069) and the deployment file is downloaded.

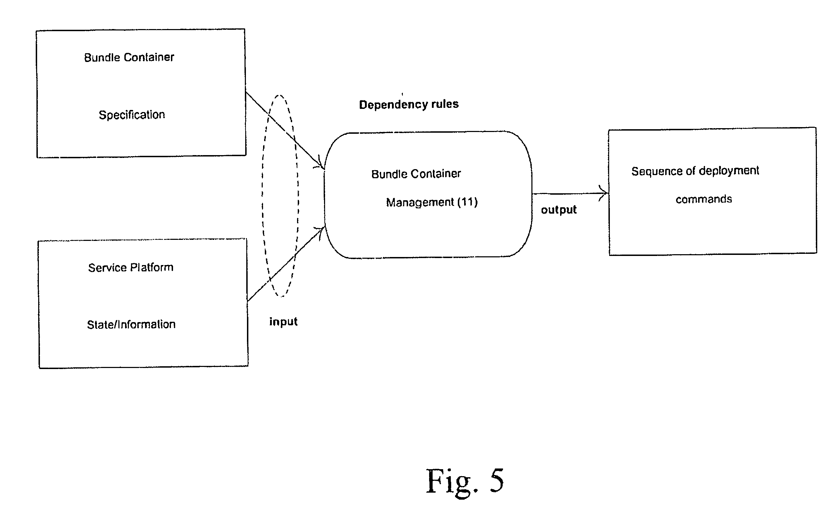

Fig. 5 illustrates a basic principle of the bundle container management process.

### Detailed Description of the Invention

Remote management of applications hosted on customer premises equipment, called Service Gateways (SGWs), is an emerging market. The concept is appealing to operators because it allows them to dynamically deploy new applications into the customer's home, i.e. new applications can be downloaded and installed on the service gateway without impacting any other service already deployed by the customer. Such remote management encompasses complete lifecycle management of the applications.

In one aspect the present invention proposes a remote management platform that allows an improved and tighter control of the installation process of applications deployed on a service platform. The invention capitalizes on providing the configuration device (platform) for remote management with the necessary intelligence such that said platform is also capable of checking if the installation of a new application is compliant with constraints (at least one) imposed by (a) previously installed service(s). Preferably, the compatibility condition(s) to be checked are imposed by the type of service platform in question or by the service subscription type of (an) application(s) or service(s) that were already installed previously.

In preferred embodiments of the present invention a remote management protocol (RMP) is used, which can advantageously be a CPE WAN management protocol (CWMP) defined by the DSL forum's Technical Report TR-069 (e.g. version V1.1 dating from December 2007, but also including earlier or future versions comprising the relevant functionalities, as would be recognised by the person of ordinary skill) for secure auto-configuration as well as other CPE management functions as for instance, but not only, dependency checking. However, it remains at all times clear to the skilled person that in the present description TR-069 is just given as an example, which does not limit the scope of the invention.

For the purpose of the present invention, the following terminology is used in the description below, corresponding, unless mentioned otherwise, with the terminology of the TR-069 specification. Note that the term "device" is used in its ordinary dictionary meaning and not as in TR-069.
- ACS (Auto-Configuration Server) : a means for automatically configuring a Customer Premises Equipment, e.g. a component in the broadband network responsible for auto-configuration of the CPE for advanced services. The ACS can also be used for lifecycle management of the services deployed on the CPE. (It is to be noted that a collection of ACSs behind a load balancer is considered a single ACS for the purposes of the present description.)
- CPE (Customer Premises Equipment) : an example of a device present at the customer premises. It preferably refers to any TR-069-compliant device. Examples of customer premises equipments are Set Top Boxes, internet/service gateway devices and LAN-side end devices, wireless sensor gateways, modems and telephones

According to the invention the remote configuration device (which in a specific embodiment of the invention is an ACS, for instance Alcatel-Lucent's home service manager (HSM) product) is arranged for proactively participating in the creation and deployment of end-user services and applications, thereby taking into account applications or services already installed previously on the service platform and/or the subscription types of said services, and preferably also features of the type of service platform.

The end-user services and applications may comprise 'bundle containers' based on the necessary bundles inventory, but also configuration data. The concept of 'bundle containers' can provide a framework in order to assemble bundles into full applications and services. This framework can be guided through a set of rules with which a container must comply in order to minimize deployment problems. These rules can be hard-coded inside the ACS or powered via a rule-engine. A bundle container can preferably act according to particular rules:
- it is preferably self-consistent: it can be installed standalone i.e. all possible intra-container dependencies have been successfully resolved before it can be used for deployment.
- it comprises inter-container bundle consistency check: the ACS is able to anticipate conflicting situations, e.g. over-specified systems, bundle versioning conflicts, configuration data conflicts, etc... To achieve this, the ACS can take into account the actual deployment status of the home devices regarding the actual installed containers (i.e. the corresponding bundles, their state and configuration data)

The container self-consistency rules can be based on intra-bundle dependencies, which can be retrieved from bundle manifest information and input from the operator and service providers (see e.g. Fig. 1):
- initialization : e.g. bundle startup sequence and level
- Platform-related dependencies: e.g. the required minimum JRE, native platform, and physical requirements (free memory, storage, CPU cycles, etc.)
- Software-related dependencies: e.g. Java imports and exports characterizing the OSGi bundles, and versions of bundles that can be used or need to be upgraded (or eventually rolled-back)
- Service-related dependencies: e.g. service and user related configuration data, OSGi service objects that must be available

The outcome of the process is a sequence of commands that will install/upgrade, start and configure the necessary bundles. These commands can be executed by the ACS (Fig.2, wherein the ACS is represented as an HSM product), written to a script file (Fig.3), or a combination of both (Fig.4).

The bundle container concept addresses at least the following technical problems:
- the very complex dependencies can be delegated to the bundle container functionality;
- Bundle containers can be deployed per-user base, taking care of what applications are running and what external resources they use and share;
- Operators have an overall view of what applications are installed on what service gateway (CPE);
- Incompatibilities, mismatching and missing dependencies can are detected upfront, and can be logged (troubleshooting), analyzed and corrected.

Aspects of the present invention provide at least the following advantages :
- with container management, the service provider or operator has full control over the software contents he distributes towards the service platforms in the home of the user;
- bundle combinations are checked for consistency, duplicates are removed, missing bundles are detected;
- lifecycle management on a group of bundles, handled atomically;
- a consistent service configuration can be provided.
In other words a consistent and controlled software deployment (installation and configuration) for services and applications that consist of multiple bundles can be provided.

In Fig.1 the concept of a bundle container 1 has been illustrated. The bundle container 1 comprises dependency information, which is broader than the typical dependency information which can be retrieved in the manifest file in the context of an OSGI platform, which typically comprises dependency information relating to execution environment 1 (Java Runtime environment), to the native environment 4 (platform information) and to the interdependencies 2 (bundle package dependencies). According to embodiments of the present invention, the bundle container comprises further dependency information relating to starting sequence 5, dynamic configuration data 7 (user and/or subscription specific), and static configuration data 6 (server provider specific).

In Fig.2 a typical scenario according to embodiments of the present invention has been illustrated. A service platform 20 (CPE/SGW) and auto configuration server 10 (which in the Fig. is the above-mentioned HSM product) are communicating by means of a TR-069 session in order to autoconfigure this service platform. All application container management operations can be executed by means of one or more TR-069 sessions. This embodiment has the advantage that is based on prior art technology at the CPE/SGW side and that no changes are required at the CPE/SGW side. In Fig.2 a typical scenario according to embodiments of the present invention has been illustrated. A service platform 20 (CPE/SGW) and auto-configuration server 10 service manager are communicating by means of a TR-069 session in order to auto-configure this service platform. All application container management operations can be executed by means of one or more TR-069 sessions. This embodiment has the advantage that is based on prior art technology at the CPE/SGW side and that no changes are required at the CPE/SGW side.

The container management (CM) 11 can be a module which computes and resolves the dependencies. It can receive as an input container definition or CPE/SGW state (for instance already installed bundles, service date) and can provide as an output a sequence of application container management operations, which is describing all the sequential steps to be performed in order to install the container on the predetermined CPE/SGW.

The deployment/logic (DL) 12 can be a module which translates the application container management operations into a sequence of TR-069 operations. It can receive as an input: the output of the container management (CM) and can provide as an output instructions to the TR-069 session protocol stack 13 what TR-069 operations need to be performed on the predetermined CPE/SGW. A typical sequence can be as follows:
1. the operator associated with the automatic configuration server defines an application container 1 by using the container management functionality 11.
2. The operator selects the CPE/SGWs 20 (individual or group) that requires the application container to be installed.
3. The container management (CM) can create for each individual CPE/SGW a "script" which can comprise all deployment operations that need to be performed. The container management can use all dependency information retrieved from the CPE/SGW and container definition and service data.
4. The container management (CM) 11 passes the "script" to the deployment logic 12 and triggers the deployment logic to deploy the container. The deployment logic can receive the script and can translate it to TR-069 protocol based operations and passes the operations to the TR-069 protocol stack 13.

It is to be noted that the "script" (the output from the container management and input for the deployment logic) can comprise or contain operations on bundle level. For instance :
- Download bundle "X";
- Lifecycle Operations: Start, Stop, Uninstall, Upgrade bundle "X";
- Configure Bundle "X" with parameters "A", "B", "C" etc.;
- Check presence of Service Object "S1", etc.,
- Check disk space storage, CPU availability information, etc.

The deployment logic 12 can interpret the abstract container management 'script' operations and can further translate them to TR-069 remote procedure calls, as for instance Download, SetParameterValues, GetParameterValues, etc., which can be managed by a TR-069 Management agent 21.

In Fig.3 another example of the present invention has been illustrated. In this embodiment a service platform CPE/SGW 20 and an ACS 10 can communicate by means of a TR-069 session in order to allow the ACS to automatically configure the service platform. The ACS comprises a TR-069 management agent. The concept is analogous with the embodiment described in Fig. 2, but the deployment logic (DL) 12 is no longer residing at the ACS side. The deployment logic is now embodied as a deployment bundle 121 located at the CPE/SGW side instead. Moreover, the deployment logic does not translate the "script" 1020 (can here be called the deployment file (DF) 1020) to TR-069 operations, but to OSGI local framework and bundle-specific operations.

A consequence is that the "script" 1020 can be fully executed via the deployment bundle 121. All bundle downloads and configuration demands can be performed at the CPE/SGW side. The CPE/SGW 20 can take all initiative to download missing bundles, upgrade bundles, etc. A typical sequence can be as follows:
1. the operator associated with the automatic configuration server defines an application container 1 by using the container management functionality 11.
2. The operator selects the CPE/SGWs 20 (individual or group) that requires the application container to be installed.
3. The container management (CM) can create for each individual CPE/SGW a "script" 1020 which can comprise all deployment operations that need to be performed. The container management can use all dependency information retrieved from the CPE/SGW, container definition and service data.
4. The container module can store the "script" or deployment file (DF) 1020 on for instance a file server. The container management can instruct the TR-069 management agent to download the deployment file (DF) 1020 and to pass it to the deployment bundle 121.

In Fig.4 a further embodiment has been illustrated which can be considered a mixed case of the previous embodiments described in Figs. 2 and 3, respectively. Differences are that the lifecycle operations are coordinated by the ACS 10 and that the deployment file (DF) 1020 comprises configuration data only and can thus be called configuration file (CF) 1020*. This configuration file can be dumped on the file server. Lifecycle operations can be coordinated or orchestrated by the ACS side via the deployment logic. This embodiment provides a performance advantage, as all configuration data can be dumped in one step, and not via a tedious sequence of TR-069 session parameter value messages. A typical sequence can be as follows:
1. the operator associated with the automatic configuration server defines an application container 1 by using the container management functionality 11.
2. The operator selects the CPE/SGW's 20 (individual or group that requires the application container to be installed.
3. The container management (CM) 11 can create for each individual CPE/SGW a "script" 1020* which can comprise all deployment operations that need to be performed. The container management can use all dependency information retrieved from the CPE/SGW and container definition, service data.
4. The container management stores the "script" configuration file (CF) 1020* on a file server. The container management can instruct the TR-069 management agent to download the deployment file and to pass it to the deployment bundle 121. The lifecycle operations can be coordinated or orchestrated by the ACS side via the deployment logic and the container management 11 can instruct the management agent 21 when to execute the configuration file.

In Fig.5 a high level flow chart illustrating embodiments of the present invention has been depicted. The bundle container specification 1 can be created by means of the ACS graphical user interface (GUI) or for instance by means of an offline tool. The service platform state/information can for instance be retrieved from the service platform (CPE/SGW) 20 or can be put in a cache memory (or database) in the auto-configuration server. The information from the bundle container 1 specification can then be compared with the information of the service platform state/information by the bundle container management according to predetermined dependence rules. The bundle container management can then generate a sequence of deployment commands based on that comparison.

Below some further examples are provided wherein various kinds of compliance conditions are illustrated.

In a first example a situation is considered wherein two kinds of subscription have been defined. A client with what in Table 1 below is called a 'gold' subscription has access to the richest application offer, in this particular case all three applications App1, App2 and App3, possibly even at the same time. Someone having a 'bronze' subscription is given access to a limited service offer, namely App1 and App2, whereby App1 and App2 cannot be used simultaneously. The operator in this case can define in the remote service platform the relationships shown in Table 3.

**Table 1**

| | App1 | App2 | App3 | App1 App2 | App1 App3 | App2 App3 | App1 App2 App3 |
|---|---|---|---|---|---|---|---|
| Bronze Subscription | x | x | | | | | |
| Gold Subscription | x | x | x | x | x | x | x |

An operator can define an application via the remote management platform according to the invention. An application typically comprises one or more application components (as already mentioned previously, in an OSGi context these are called bundles) and some metadata. An application can also be a logical grouping of several bundles or application components.

The remote management platform also allows defining service platform types or service subscription types. The definition of a service platform type might for example be based on the hardware and hardware type, on the amount of memory and/or disk space available on the service platform, on the execution environment(s) that run on the Service Platform (e.g. Service platform exposing a Linux execution environment, another type running an OSGI execution environment, another type running both Linux and OSGI execution environments). Note that this list is non-exhaustive.

Further, the remote management platform provides the means to explicitly define the relation between applications and service platforms, subscription types or combinations of service platform types and subscription types.

A further example is now given. It is assumed that three applications have been defined with their underlying application components. The application components are typically software blocks. As shown in Table 2 below, application 1 only needs component 1, application 2 needs components 1 and 3 and application 3 requires the installation of components 2 and 3.

**Table 2**

| | Component 1 | Component 2 | Component 3 |
|---|---|---|---|
| Application I | X | | |
| Application 2 | X | | X |
| Application 3 | | X | X |

Suppose that in addition two types of service platform have been defined. The operator can then add the knowledge about the relationship between the service platform types and the applications shown in Table 3.

**Table 3**

| | App 1 | App 2 | App 3 | App 1 App 2 | App 1 App 3 | App 2 App 3 | App 1 App 2 App 3 |
|---|---|---|---|---|---|---|---|
| SGW 1 | X | X | | X | | | |
| SGW 2 | X | X | X | X | X | X | X |

In this particular example, all applications and combinations thereof can be installed on a service platform of type 'SGW2', while only a subset can be installed on a service platform of SGW type 'SGW1'.
The above is then combined with the first example. The operator can define the relationship between the combination of service platform types and subscription types on the one hand and the applications on the other hand. Table 4 shows the result.

**Table 4**

| | App1 | App2 | App3 | App1 App2 | App1 App3 | App2 App3 | App1 App2 App3 |
|---|---|---|---|---|---|---|---|
| Bronze Subscription + SGW Type 1 | x | x | | | | | |
| Bronze Subscription + SGW Type 2 | x | x | | | | | |
| Gold Subscription + SGW Type 1 | x | x | | x | | | |
| Gold Subscription + SGW Type 2 | x | x | x | x | x | x | x |

Once provided with these dependencies, the remote management platform can enforce or warn operators or OSS systems when they attempt installation of a particular application on a service platform. In this process, the management platform would retrieve the inventory of installed applications on a particular service gateway either from its database or directly from the service platform itself. Based on that info, it could either provide the operator with a limited set of applications that can be additionally installed on the service platform or it could show the full list of applications and display a warning if operators try to install applications that are no fit for the selected service platform.

The information as described above is advantageously stored in the remote management platform or at a location accessible by the management platform.

The problem solved by the present invention is encountered by any operator or service provider offering remote lifecycle management of applications. The proposed solution gives them the capability to test off-line the combination of services that can be jointly installed on a given service platform, thereby also taking into account the type of service platform and/or the subscription type(s), without running the risk of services adversely impacting each other. This can be particularly relevant for integrated service platforms. Operators would otherwise be reluctant to install new applications if they could impact e.g. IPTV services already running on the service platform.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for automatically installing an application on a service platform, the method comprising the steps of :
- checking if installing said application on said service platform is in agreement with at least one compliance condition imposed by a service available on said service platform, said service being different from said application,
- installing said application on said service platform if said checking yields a positive outcome.

2. Method for automatically installing as in claim 1, whereby said at least one compliance condition is imposed by a service subscription type of said service available on said service platform.

3. Method for automatically installing as in claim 1 or 2, whereby said at least one compliance condition is imposed by operational parameters of said service platform.

4. Method for automatically installing as in any of claims 1 to 3, further comprising a step of defining said application to be installed.

5. Method for automatically installing as in claim 4, whereby the step of defining comprises indicating at least one application component of said application and meta-information.

6. Method for automatically installing as in any of claims 2 to 6, further comprising a step of defining said service subscription type.

7. Method for automatically installing as in any of claims 3 to 6, further comprising a step of defining said operational parameters.

8. Method for automatically installing as in any of the previous claims, wherein said checking comprises defining a relation between said application and said service platform.

9. Method for automatically installing as in any of the previous claims, whereby, in case the outcome of said checking is negative, a message is conveyed to the operator of said remote configuration device.

10. Method for automatically installing as in any of the previous claims, wherein said installing is performed via an associated auto-configuration server according to a remote management protocol.

11. Method for automatically installing as in claim 10, further comprising the step of checking bundle dependency information.

12. Method for automatically installing as in any of the previous claims, wherein said service platform comprises an execution environment arranged for supporting lifecycle management operations.

13. Method for automatically installing as in any of the previous claims, further comprising the step of storing dependency information on a dependency storage means.

14. Remote configuration device arranged for automatically installing an application on a service platform and comprising processing means for checking if installing said application on said service platform is in agreement with compliance conditions imposed by a service available on said service platform, said service being different from said application.

15. Service platform adapted for storing at least one compliance condition imposed by a service available on said service platform for an application to be installed, said dependency information comprising application dependency information.
